(19) Europäisches Patentamt
European Patent Office
Office européen des brevets

(11) Numéro de publication : **0 095 982**
**B1**

(12) # FASCICULE DE BREVET EUROPÉEN

(45) Date de publication du fascicule du brevet : **27.07.88**

(51) Int. Cl.$^4$ : **C 07 F 7/08**, H 01 M 6/18, C 08 L 71/02

(21) Numéro de dépôt : **83401083.7**

(22) Date de dépôt : **30.05.83**

(54) **Tetrakis trialkyl siloxy alanates de métaux alcalins, leurs solutions solides avec des matières plastiques et leur application à la constitution d'éléments conducteurs pour des générateurs électrochimiques.**

(30) Priorité : **01.06.82 FR 8209539**

(43) Date de publication de la demande :
**07.12.83 Bulletin 83/49**

(45) Mention de la délivrance du brevet :
**27.07.88 Bulletin 88/30**

(84) Etats contractants désignés :
**AT BE CH DE GB IT LI LU NL SE**

(56) Documents cités :
**DE-C- 937 557**
**CHEMICAL ABSTRACTS, vol. 68, no. 3, 15 janvier 1968, page 1257, no. 13047z, Columbus, Ohio, USA; L.V. MYSHLYAEVA et al.: "Study of the reaction of trimethylchlorosilane with an aqueous-alkalinesolution of sodium aluminate"**

(73) Titulaire : **ANVAR Agence Nationale de Valorisation de la Recherche**
**43, rue Caumartin**
**F-75436 Paris Cédex 09 (FR)**

**SOCIETE NATIONALE ELF AQUITAINE**
**Tour Aquitaine**
**F-92400 Courbevoie (FR)**

(72) Inventeur : **Armand, Michel**
**10, rue Gabriel Fauré**
**F-74000 Annecy (FR)**
Inventeur : **El Kadiri Cherkaoui El Moursly, Fouzia**
**Villa Cherkaoui Rue Smara Bettana**
**Sale (MA)**

(74) Mandataire : **Gutmann, Ernest et al**
**S.C. Ernest Gutmann - Yves Plasseraud 67, boulevard Haussmann**
**F-75008 Paris (FR)**

**EP 0 095 982 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'objet de la présente demande concerne un matériau à conduction ionique, notamment cationique, caractérisé en ce qu'il est constitué par une solution solide d'un ou plusieurs des composés ioniques de formule :

$$[AlO_4(SiR_3)_4]^-M^+$$

dans laquelle les groupes R sont des radicaux alcoyle ou aralcoyle aprotiques, c'est-à-dire des radicaux non donneurs de protons, comportant moins de 15 atomes de carbone et M est un métal alcalin, entièrement dissous au sein d'un matériau macromoléculaire formé par des mono- et/ou des copolymères dérivés de motifs monomères comportant au moins un hétéroatome d'oxygène ou d'azote, apte à former des liaisons du type donneur-accepteur avec le cation du composé ionique représenté :
soit par la formule suivante :

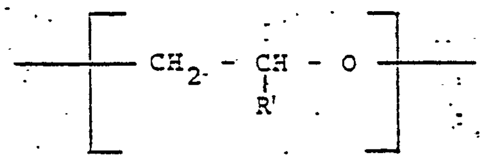

dans laquelle R′ représente un atome d'hydrogène ou l'un des groupes Ra, $—CH_2—O—Ra$, $—CH_2—O—Re—Ra$, $—CH_2—N=(CH_3)_2$, avec Ra représentant un radical alcoyle ou cycloalcoyle comportant notamment 1 à 16, de préférence 1 à 4 atomes de carbone, Re représentant un radical polyéther de formule générale : $—(CH_2—CH_2O)_p—$, p ayant une valeur de 1 à 100, notamment de 1 à 2 ;
soit par la formule suivante :

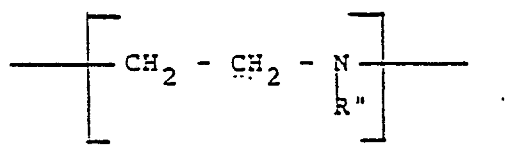

dans laquelle R″ représente Ra, —Re—Ra, avec Ra et Re ayant respectivement l'une des significations sus-indiquées ;
soit par la formule suivante :

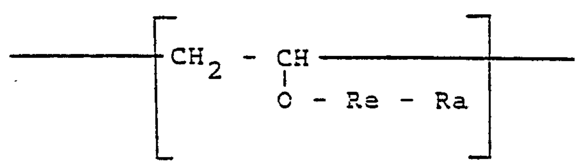

dans laquelle Ra et Re ont respectivement l'une des significations sus-indiquées ;
soit par la formule :

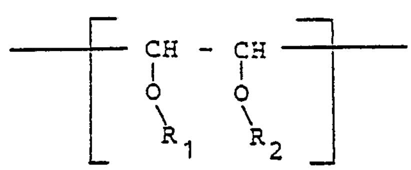

dans laquelle $R_1$ et $R_2$ sont identiques ou différents et représentent chacun l'un des groupes Re, Re-Ra avec les significations ci-dessus, Re pouvant alors représenter aussi un polyéther de formule :

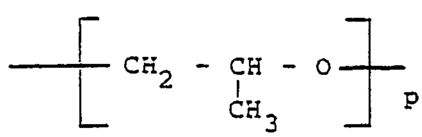

le rapport du nombre d'hétéroatomes provenant des motifs monomères du susdit matériau macromoléculaire au nombre d'atomes du métal alcalin dudit composé ionique étant compris entre 4 et 30, notamment

entre 4 et 16.

Les matériaux à conduction ionique dans lesquels le composé ionique est susceptible de se dissoudre dans au moins certains des matériaux plastiques, tels que ceux qui ont été décrits dans la demande de brevet européen nº 0 013 199 intitulée « Générateurs électrochimiques de production de courant et nouveaux matériaux pour leur fabrication ».

L'invention concerne les solutions solides qui, comme celles plus particulièrement décrites dans la susdite demande de brevet européen, sont douées d'une conductivité cationique suffisante pour être utilisables pour la production d'électrolytes solides pour la constitution d'électrodes de générateurs électrochimiques, lorsque ces électrodes sont constituées par le produit d'agglomération en une masse composite de la matière active de celle-ci et, le cas échéant, d'un composé inerte à conduction électronique, d'une part, et de la solution solide susdite, d'autre part.

Les solutions solides selon l'invention peuvent mettre en œuvre un autre type de matière plastique, dans la mesure où les caractéristiques de solubilité réciproques sont suffisantes à l'obtention d'une solution solide présentant une conductivité cationique de $10^{-5}$ $ohms^{-1} \cdot cm^{-1}$, de préférence à une température n'excédant pas 130 °C.

Les composés ioniques entrant dans la constitution de matériaux à conduction ionique selon l'invention peuvent être représentés par la formule globale suivante

$$[AlO_4(SiR_3)_4]^-M^+$$

dans laquelle les groupes R sont des radicaux hydrocarbonés aprotiques, c'est-à-dire des radicaux non donneurs de protons, et M est un métal alcalin.

Les groupes hydrocarbonés sont choisis parmi ceux qui permettent au composé ionique ainsi formé de former des solutions solides mutuelles avec des matériaux plastiques, plus particulièrement avec des composés du type polyéther, tels qu'ils ont été définis dans la susdite demande de brevet européen ou encore avec des matériaux plastiques formés de macromolécules hydrocarbonées portant des chaînes latérales, du type polyéther.

Les groupes R contiennent un nombre d'atomes de carbone qui est inférieur à 15. De préférence, ils sont constitués par des groupes alkyle comportant jusqu'à 4 atomes de carbone, le groupe méthyle terminal pouvant, le cas échéant, être remplacé par un groupe phényle. En d'autres termes les groupes R constituent des groupes alkyle ou aralkyle. Ils sont identiques ou différents les uns des autres, que ce soit à l'intérieur d'un même groupe trialkylsiloxy ou d'un groupe trialkylsiloxy à l'autre. Dans le premier cas, et lorsque l'un des groupes R contient un groupe aryle ou aralkyle, les deux autres groupes R du même groupe trialkylsiloxy seront constitués par des alkyles. Conformément à une variante avantageuse de l'invention, certains des atomes de carbone de ces groupes hydrocarbonés sont remplacés par des hétéro-atomes tels que des atomes d'oxygène, de soufre ou d'azote.

Les composés ainsi obtenus seront, dans ce qui suit, dénommés « tétrakis-trialkylsiloxy alanates de métaux alcalins ».

Ces derniers composés peuvent être préparés par un procédé consistant à faire réagir un halogénure mixte d'aluminium et du métal alcalin recherché avec un dérivé trialkyl siloxy d'un métal dans des conditions de réaction permettant la précipitation de l'halogénure de ce dernier métal. On peut avoir recours à tout solvant aprotique inerte répondant à ces conditions, notamment THF.

On décrit ci-après le principe de la réaction appliquée à la production du tétrakis (triméthyl siloxy) alanate de lithium de formule :

$$Li^+[CH_3)_3SiO]_4Al^-$$

On utilise la réaction d'échange :

$$LiAlCl_4 + 4Na(CH_3)_3SiO \longrightarrow 4NaCl + Li^+[(CH_3)_3SiO]_4A^-$$

Conditions de la réaction : en solution dans THF sous atmosphère d'azote ; température ordinaire.

Les quantités stœchiométriques des composés sont pesées en boîte à gants et dissoutes séparément dans le tétrahydrofuranne. On constate l'apparition immédiate d'un précipité (NaCl), après mélange des solutions sous agitation.

Afin d'éliminer toute trace d'ion sodium du milieu réactionnel dû à un éventuel excès de silanate, du chlorure de lithium est ajouté pour déplacer l'équilibre selon l'équation

$$(CH_3)_3SiONa^+LiCl \longrightarrow NaCl + Li(CH_3)_3SiO$$

On obtient finalement le composé

$$Li^+[(CH_3)_3SiO]_4Al^-$$

après filtration et évaporation du solvant.

Les composés ioniques entrant dans la constitution de matériaux à conduction ionique selon l'invention présentent des qualités tout à fait satisfaisantes de dissolution mutuelle avec le poly (oxyde de propylène) et même, pour les composés dans lesquels les groupes R sont constitués par des chaînes hydrocarbonées de faible longueur, avec le poly (oxyde d'éthylène). Les solutions solides obtenues présentent une conductivité cationique permettant leur utilisation en tant que matériaux d'électrolyte pour des générateurs électrochimiques, de préférence du type rechargeable, dont les caractéristiques préférées sont rappelées plus loin.

Elle concerne donc des matériaux à conduction ionique, notamment cationique, ainsi obtenus, plus particulièrement un nouvel électrolyte solide polymère constitué par une solution solide d'un ou plusieurs des composés ioniques, entièrement dissous au sein d'un matériau macro-moléculaire formé par un polymère, dont les motifs monomères (d'une ou plusieurs sortes) comportent au moins un hétéroatome d'oxygène ou d'azote, apte à former des liaisons du type donneur-accepteur avec le cation du composé ionique.

De préférence, le rapport du nombre d'hétéroatomes provenant du ou des motifs monomères dudit polymère au nombre d'atomes du métal alcalin dudit composé ionique est compris entre 4 et 30, notamment 4 et 16. Il va de soi que la proportion du composé ionique dissous doit être compatible avec son niveau de solubilité dans le polymère choisi.

Le métal alcalin est de préférence le lithium ou le sodium.

Des matériaux plastiques préférés dans lesquels les composés ioniques mis en solution, sont des homo- et/ou copolymères dérivés de motifs monomères représentés :

soit par la formule suivante

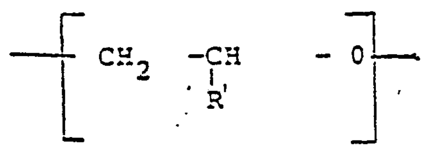

dans laquelle R' représente un atome d'hydrogène ou l'un des groupes Ra, $—CH_2—O—Ra$, $—CH_2—O—Re—Ra$, $—CH_2—N = (CH_3)_2$, avec Ra représentant un radical alkyle ou cycloalkyle comportant 1 à 16, de préférence 1 à 4 atomes de carbone, Re représentant un radical polyéther de formule générale

$$—(CH_2—CH_2—O)p—,$$

p ayant une valeur de 1 à 100, notamment de 1 à 2,

soit par la formule suivante :

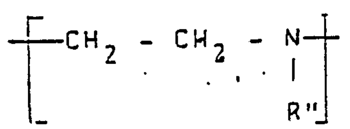

dans laquelle R" représente Ra, —Re—Ra, avec Ra et Re ayant respectivement l'une des significations sus-indiquées,

soit par la formule suivante :

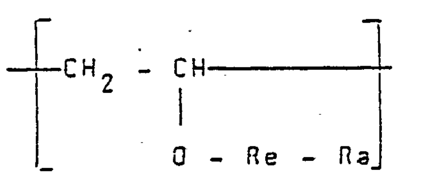

dans laquelle Ra et Re ont respectivement l'une des significations sus-indiquées,

soit par la formule :

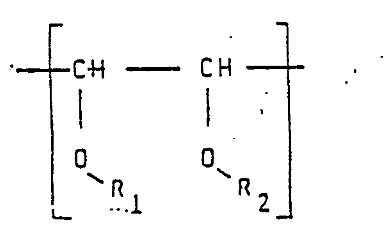

dans laquelle $R_1$ et $R_2$ sont identiques ou différents et représentent chacun l'un des groupes Re, Re-Ra avec les significations ci-dessus, Re pouvant alors représenter aussi un polyéther de formule

7

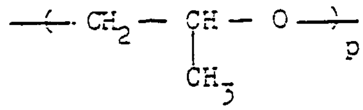

La préparation de l'électrolyte solide polymère peut s'effectuer par mise en solution, dans un solvant tel que l'acétonitrile, ou encore le méthanol, du polymère et du composé ionique, puis élimination du solvant, étant entendu que l'on utilise une proportion de composé ionique inférieure à celle pour laquelle le seuil de solubilité est atteint.

On peut aussi utiliser toute méthode connue ne mettant pas en œuvre de solvant, par exemple par dissolution dans le polymère fondu.

Les électrolytes solides réalisés selon l'invention, trouvent une application particulièrement intéressante pour la réalisation de générateurs électrochimiques aussi bien primaires que secondaires.

En particulier, un électrolyte solide comportant en solution un composé ionique sus-indiqué, peut être associé à une électrode négative constituée d'un matériau apte à fournir l'ion alcalin correspondant au métal du composé ionique choisi et une électrode positive apte à incorporer les atomes de ce métal. On peut, par exemple, prévoir une électrode négative constituée par ce même métal alcalin sous la forme d'un alliage, ou constituée par un composé intermétallique, un composé d'insertion ou analogue. Pour l'électrode positive, on peut utiliser tout matériau dont la structure cristalline permet l'insertion de métaux alcalins. On cite par exemple les chalcogénures qui permettent la diffusion du métal alcalin dans leur structure. On peut encore, pour ce qui est d'autres exemples de matériaux appropriés à la formation de l'électrode positive, se référer à la demande de brevet européen déjà citée.

On peut aussi prévoir de réaliser une des électrodes, par exemple la positive, en formant un composite à partir de la matière active de celle-ci et de la solution solide du composé ionique, au sein du même matériau macromoléculaire. Ce composite peut comporter aussi un composé inerte à conduction électronique. On pourra avoir recours, pour constituer de telles électrodes — et mis à part le choix du composé cationique aux mêmes modes de constitutions que ceux décrits dans la demande de brevet européen n° 0 013 199.

Lorsqu'on réalise ces générateurs, on s'aperçoit que le nouvel électrolyte selon l'invention présente l'avantage que l'anion du sel ou composé ionique en solution est inerte vis-à-vis de la plupart des matériaux d'électrode que l'on peut utiliser. Cette propriété autorise un grand nombre de cycles et un stockage stable. En outre, cette inertie chimique confère aux générateurs ainsi réalisés une très bonne résistance aux chocs thermiques.

D'autres caractéristiques et avantages des électrolytes solides polymères selon l'invention apparaîtront dans les exemples de réalisation qui suivent.

Ces exemples sont indicatifs des propriétés chimiques et/ou physiques de composés ioniques particuliers de l'invention et, en relation avec les électrolytes plastiques constitués avec certains d'entre eux, des valeurs des températures en °C pour lesquelles les conductivités sont égales à environ $10^{-5}\Omega^{-1}\ cm^{-1}$ ($T\sigma 10^{-5}$), voire même à $10^{-4}\Omega^{-1}\ cm^{-1}$ ($T\sigma 10^{-4}$). Ces mesures ont été effectuées sous vide, de façon à éliminer toute trace d'humidité et/ou de solvant.

Dans tous ces exemples, le matériau macromoléculaire est, selon le cas, un poly-(oxyde d'éthylène) (POE) ou un poly-(oxyde de propylène) de masses moléculaires égales ou supérieures à 900 000. L'électrolyte a été obtenu par dissolution de 1 g de ce poly (oxyde d'éthylène) ou de ce poly (oxyde de propylène) dans 35 ml d'acétonitrile, puis addition du composé ionique, pour obtenir les rapports atomiques O/Li ou O/Na qui sont indiqués ci-après.

La solution ainsi obtenue est coulée sur un support de polytétrafluoréthylène, sur une épaisseur de 5 mm, puis étuvée à 60 °C pendant 3 heures.

Les mesures de conductivité ont été faites selon les techniques décrites par E. Schouler et al, J. Chim. Phys. 91 309/16 (1973) et D. Ravaine et al, J. Chim. Phys. 5 (93-70) (1974).

Synthèse du composé : tétrakis (triméthylsiloxy) alanate de formule :

$$Li^+[(CH_3)_3SiO]_4Al^-$$

On utilise la réaction d'échange :

$$LiAlCl_4 + 4Na\ (CH_3)_3\ SiO \longrightarrow \underline{4NaCl} + Li^+[(CH_3)_3SiO]_4Al^-$$

Conditions de la réaction : en réaction dans THF sous atmosphère d'azote : température ordinaire.

Les quantités stœchiométriques des composés sont pesées en boîte à gants et dissoutes séparément dans le tétrahydrofuranne. On constate l'apparition immédiate d'un précipité (NaCl) après mélange des solutions sous agitation.

Afin d'éliminer toute trace d'ion sodium du milieu réactionnel dû à un éventuel excès de silanate, du chlorure de lithium est ajouté pour déplacer l'équilibre selon :

$$(CH_3)_3SiONa + LiCl \rightleftarrows NaCl + Li(CH_3)_3\ SiO.$$

Après cela, une filtration suivie de l'élimination du solvant à l'évaporateur rotatif permet d'obtenir le composé :

$$Li^+[(CH_3)_3SiO]_4Al^-$$

ou

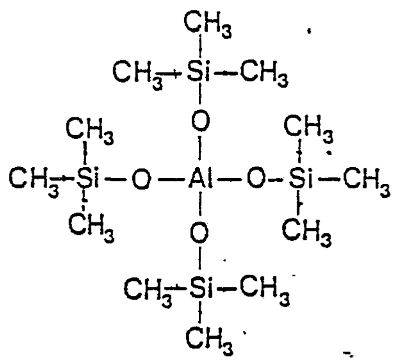

Ce composé est un solide blanc, microcristallin, très soluble dans les solvants polaires (THF, DMSO). Il est soluble aussi dans certains solvants non polaires (benzène, toluène, tétrachlorure de carbone), propriétés remarquables pour un composé ionique. Il fond vers 185 °C. Il doit être manipulé à l'abri de l'humidité.

Il présente, au niveau de la solubilité dans des polymères, une excellente compatibilité avec le PPO. Les quantités électrochimiques des solutions solides obtenues, les rendent particulièrement utiles pour la constitution des conducteurs ioniques (notamment électrolytes) des générateurs électrochimiques dont la constitution a été rappelée plus haut. En témoignent les résultats suivants de conductivité.

| O/Li | $t\sigma\ 10^{-5}$ | $t\sigma\ 10^{-4}$ |
|---|---|---|
| 8 | 114 | 130 |
| 12 | 50 | 128 |

Il va de même des solutions solides obtenues avec PPO et

$$M^+[(C_2H_5)_3SiO]_4Al^-$$
$$M^+[(CH_3)_2—(C_2H_4—C_6H_5)SiO]_4Al^-$$

avec $M^+ = Li$ ou $Na$.

**Revendications**

1. Matériau à conduction ionique, notamment cationique, caractérisé en ce qu'il est constitué par une solution solide d'un ou plusieurs des composés ioniques de formule :

$$[AlO_4(SiR_3)_4]^-M^+$$

dans laquelle les groupes R sont des radicaux alcoyle ou aralcoyle aprotiques, c'est-à-dire des radicaux non donneurs de protons, comportant moins de 15 atomes de carbone et M est un métal alcalin, entièrement dissous au sein d'un matériau macromoléculaire formé au moins en partie par des mono- et/ou des copolymères dérivés de motifs monomères comportant au moins un hétéroatome d'oxygène ou d'azote, apte à former des liaisons du type donneur-accepteur avec le cation du composé ionique représenté :

soit par la formule suivante :

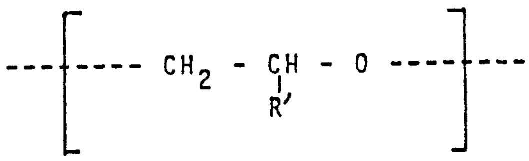

dans laquelle R′ représente un atome d'hydrogène ou l'un des groupes Ra, $—CH_2—O—Ra$, $—CH_2—O—Re—Ra$, $—CH_2—N=(CH_3)_2$, avec Ra représentant un radical alcoyle ou cycloalcoyle comportant 1 à 16, de préférence 1 à 4 atomes de carbone, Re représentant un radical polyéther de formule générale :

$$—(CH_2—CH_2—O)_p—$$

p ayant une valeur de 1 à 100, notamment de 1 à 2 ;
soit par la formule suivante :

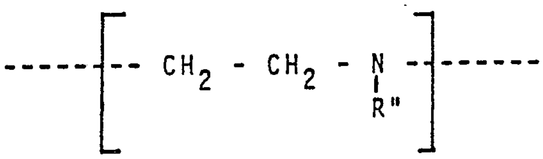

dans laquelle R″ représente Ra, —Re—Ra, avec Ra et Re ayant respectivement l'une des significations sus-indiquées ;
soit par la formule suivante :

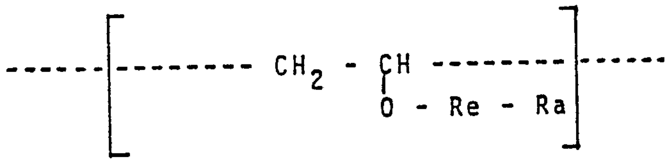

dans laquelle Ra et Re ont respectivement l'une des significations sus-indiquées ;
soit par la formule :

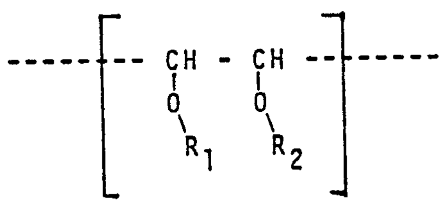

dans laquelle $R_1$ et $R_2$ sont identiques ou différents et représentent chacun l'un des groupes Re, Re-Ra avec les significations ci-dessus, Re pouvant alors représenter aussi un polyéther de formule :

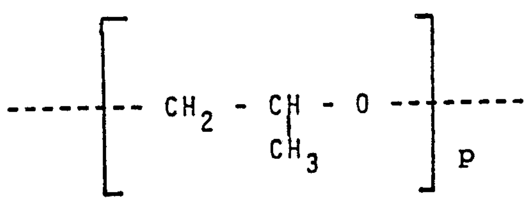

le rapport du nombre d'hétéroatomes provenant des motifs monomères du susdit matériau macromoléculaire au nombre d'atomes du métal alcalin dudit composé ionique étant compris entre 4 et 30, notamment entre 4 et 16.

2. Matériau selon la revendication 1, caractérisé en ce que le composé ionique consiste en un tétrakis (triméthylsiloxy) alanate.

3. Matériau selon la revendication 1, caractérisé en ce qu'il est constitué au moins en partie par une solution solide d'un ou plusieurs des composés ioniques de formule :

$$[AlO_4(SiR)_3)_4]^-M^+$$

dans laquelle les groupes alcoyle comportent jusqu'à 4 atomes de carbone.

4. Matériau selon la revendication 1 caractérisé en ce qu'il est constitué au moins en partie par une

solution solide d'un ou plusieurs des composés ioniques de formule :

$$[AlO_4(SiR)_3)_4]^-M^+$$

dans laquelle dans l'un des groupes $SiR_3$, l'un des groupes R est un groupe phénylalcoyle, la partie alcoyle comporte jusqu'à 3 atomes de carbone et les deux autres groupes R sont des groupes alcoyle comportant jusqu'à 4 atomes de carbone.

5. Matériau selon les revendications 1 à 4, caractérisé en ce que le matériau macromoléculaire est constitué par du poly (oxyde d'éthylène) ou du poly (oxyde de propylène).

6. Générateur électrochimique, caractérisé en ce que son électrolyte est constitué par le matériau selon l'une quelconque des revendications 1 à 5 et en ce que l'électrode négative qui lui est associée est constituée d'un matériau apte à fournir l'ion alcalin correspondant au métal du composé ionique choisi, et que l'électrode positive qui lui est associée est apte à incorporer les atomes de métal.

7. Structure d'électrode dans laquelle le matériau d'électrode de ladite structure comprend un matériau à conduction ionique selon l'une quelconque des revendications 1 à 5.

**Claims**

1. Material with ionic conduction, particularly cationic, characterized by the fact that it is constituted at least in part by a solid solution of one or several ionic compounds of formula :

$$[AlO_4(SiR_3)_4]^-M^+$$

in which the groups R are alkyl or aprotic aralkyl radicals, i. e. radicals which are non donors of protons, comprising less than 15 carbon atoms, and M is an alkali metal entirely dissolved within a macromolecular material formed at least in part by mono and/or copolymers derived from monomer units comprising at least a heteroatom, particularly oxygen or nitrogen, liable to form bonds of donor-acceptor type with the cation of the ionic compound represented by :
either the following formula :

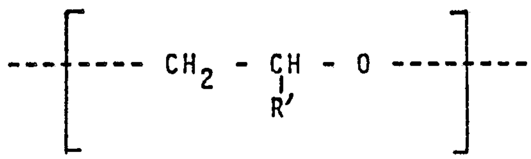

in which R' represents a hydrogen atom or one of the group Ra, $—CH_2—O—Ra$, $—CH_2—O—Re—Ra$, $—CH_2—N=(CH_3)_2$, with Ra representing an alkyl or a cycloalkyl radical including particularly 1 to 16, preferably 1 to 5 carbon atoms, Re representing a polyether radical of the general formula :

$$—(CH_2—CH_2O)_p—$$

p having a value of 1 to 100, particularly from 1 to 2,
or by the following formula :

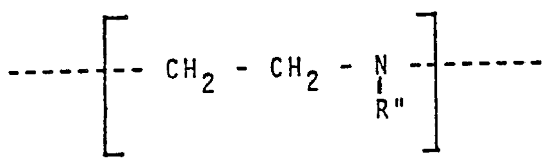

in which R" represents Ra, —Re—Ra, with Ra and Re having respectively one of the above indicated meanings,
or by the following formula :

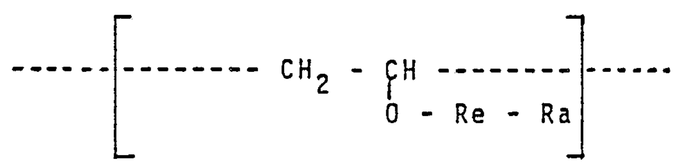

in which Ra and Re have respectively one of the above indicated meanings,
or by the formula :

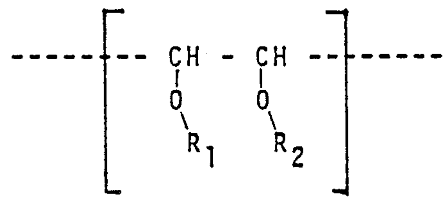

in which $R_1$ and $R_2$ are identical or different and each represent one of the groups Re, Re-Ra with the above meanings, and Re can then represent also a poly-ether of the formula :

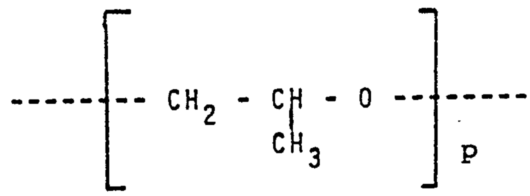

the ratio of the hetero atom number derived from the monomer units of the above macromolecular material to the atom number of atoms of the alkali metal of said ionic compound being comprised between 4 and 30, particularly between 4 and 16.

2. Material according to claim 1, characterized by the fact that the ionic compound consists of one tetrakis (trimethylsiloxy) alanate.

3. Material according to claim 1, characterized by the fact that it is constitued at least in part by a solid solution of one or several ionic compounds of formula :

$$[AlO_4(SiR)_3)_4]^-M^+$$

in which the alkyl group comprises up to 4 carbon atoms.

4. Material according to claim 1, characterized by the fact that it is constituted at least in part by a solid solution of one or several ionic compounds of formula :

$$[AlO_4(SiR)_3)_4]^-M^+$$

in which in one of the $SiR_3$ groups, one of the group R is a phenylalkyl group, the alkyl part comprises up to 3 carbon atoms and the other two groups R are alkyl groups comprising up to 4 carbon atoms.

5. Material according to claims 1 to 4, characterized by the fact that the macromolecular material is constituted by poly (ethylene oxide) or poly (propylene oxide).

6. Electrochemical generator, wherein its electrolyte is constituted by a material according to anyone of claims 1 to 5, and wherein the negative electrode associated with it is constitued from a material adapted to provide the alkali ion corresponding to the metal of the ionic compound selected, and the positive electrode which is associated with it is adapted to incorporate the atoms of this metal.

7. Electrode structure in which the electrode material of said structure comprises a material with ionic conduction according to anyone of claims 1 to 5.

**Patentansprüche**

1. Material für die ionische, insbesondere kationische Leitung, dadurch gekennzeichnet, daß es von einer festen Lösung einer oder mehrerer Verbindungen der Formel :

$$[AlO_4(SiR_3)_4]^-M^+$$

gebildet ist, in der die Gruppen R aprotische Alkyl- oder Aralkyl-Reste sind, d. h. Reste, die nicht Protonendonatoren sind, die weniger als 15 Kohlenstoffatome aufweisen, und M ein Alkalimetall ist, wobei die Verbindung vollständig in einem makromolekularem Material gelöst ist, das mindestens teilweise von Mono- oder Copolymeren gebildet ist, die aus Monomereinheiten abgeleitet sind, die mindestens ein Heteroatom Sauerstoff oder Stickstoff aufweisen, und geeignet ist zur Bildung von Verbindungen des Typs Donator-Akzeptor mit dem Kation der ionischen Verbindung, und dargestellt ist : entweder durch die folgende Formel :

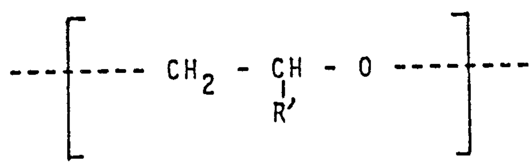

in der R' ein Wasserstoffatom oder eine der Gruppen Ra, $—CH_2—O—Ra$, $—CH_2—O—Re—Ra$, $—CH_2—N = (CH_3)_2$, darstellt, wobei Ra einen Alkyl- oder Cykloalkylrest mit 1-16, vorzugsweise 1-4 Kohlenstoffatomen darstellt, Re einen polyätherrest der allgemeinen Formel :

$$—(CH_2—CH_2—O)_p—$$

darstellt und p einen Wert von 1-100, insbesondere von 1-2 aufweist ;
oder durch die folgende Formel :

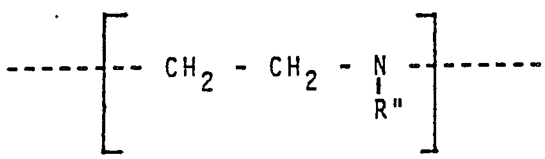

in der R", Ra, —Re—Ra, darstellt, wobei Ra und Re jeweils eine der oben gennanten Bedeutungen aufweisen ;
oder durch die folgende Formel :

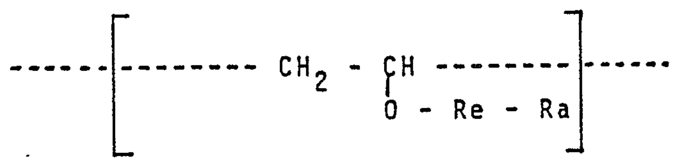

in der Ra und Re jeweils eine der oben genannten Bedeutungen aufweisen ;
oder durch die Formel :

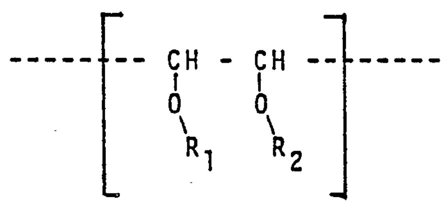

in der $R_1$, und $R_2$ gleich oder verschieden sind und jeweils eine der Gruppen Re, Re-Ra mit den obigen Bedeutungen darstellen und Re ebenfalls einen Polyäther bedeuten kann von der Formel :

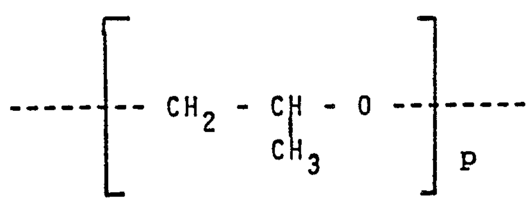

wobei das Verhältnis der Zahl der aus den Monomergerüsten des obigen makromolekularen Materials stammenden Heteroatome zur Zahl der Atome des alkalischen Metalls der obigen ionischen Verbindung zwischen 3 und 30, insbesondere 4 und 16 liegt.

2. Material nach Anspruch 1, dadurch gekennzeichnet, daß die ionische Verbindung aus einem Tetrakis (Trimethylsiloxy)-alanat besteht.

3. Material nach Anspruch 1, dadurch gekennzeichnet, daß es mindestens teilweise durch eine feste Lösung einer oder mehrerer ionischer Verbindungen der Formel

$$[AlO_4(SiR_3)_4]^-M^+$$

gebildet ist, in der die Alkylgruppen bis zu 4 Kohlenstoffatome aufweisen.

4. Material nach Anspruch 1, dadurch gekennzeichnet, daß es mindestens teilweise durch eine feste Lösung einer oder mehrerer ionischer Verbindung der Formel :

$$[AlO_4(SiR_3)_4]^-M^+$$

gebildet ist, in der in einer der Gruppen $SiR_3$, eine der Gruppen R eine Phenylalkylgruppe ist, der Alkylteil bis zu 3 Atome aufweist und die beiden anderen Gruppen R Alkylgruppen mit bis zu 4 Kohlenstoffatomen sind.

5. Material nach den Ansprüchen 1-4, dadurch gekennzeichnet, daß das makromolekulare Material von Poly (äthylenoxyd) oder von Poly (propylenoxyd) gebildet ist.

6. Elektrochemischer Generator, dadurch gekennzeichnet, daß sein Elektrolyt durch das Material nach einem der Ansprüche 1 bis 5 gebildet ist und daß die im zugeordnete negative Elektrode von einem Material gebildet ist, das in der Lage ist, das dem Metall der gewählten ionischen Verbindung entsprechende alkalische Ion zu liefern, und daß die ihm zugeordnete positive Elektrode in der Lage ist, die Metallatome aufzunehmen.

7. Elektrodenstruktur, in der das Elektrodenmaterial der Struktur ein ionisches Leitungsmaterial nach einem der Ansprüche 1 bis 5 umfaßt.